Europäisches Patentamt

European Patent Office

Office européen des brevets

(11) Veröffentlichungsnummer: **0 459 151 A1**

## (12) EUROPÄISCHE PATENTANMELDUNG

(21) Anmeldenummer: 91106757.7

(22) Anmeldetag: 26.04.91

(51) Int. Cl.5: **C08G 65/30**

(30) Priorität: 07.05.90 DE 4014484

(43) Veröffentlichungstag der Anmeldung:
04.12.91 Patentblatt 91/49

(84) Benannte Vertragsstaaten:
BE DE FR GB IT NL

(71) Anmelder: **BASF Aktiengesellschaft**
**Carl-Bosch-Strasse 38**
**W-6700 Ludwigshafen(DE)**

(72) Erfinder: **Müller, Herbert, Dr.**
**Carostrasse 53**
**W-6710 Frankenthal(DE)**

(54) Verfahren zur Reinigung von Polyalkylenetherglykolen.

(57) Verfahren zur Reinigung von Polyalkylenetherglykolen durch Neutralisation der alkalischen Katalysatoren mit ortho-Phosphorsäure im Äquivalenzverhältnis von 1,5 bis 2,5 : 3 und nachfolgender Abtrennung der gebildeten anorganischen Salze mit Hilfe eines Filtervlieses, indem man bei nachlassender Filterleistung das Filtervlies einer Wasserbehandlung und nachfolgender Trocknung aussetzt und erneut zur Abtrennung der gebildeten anorganischen Salze verwendet.

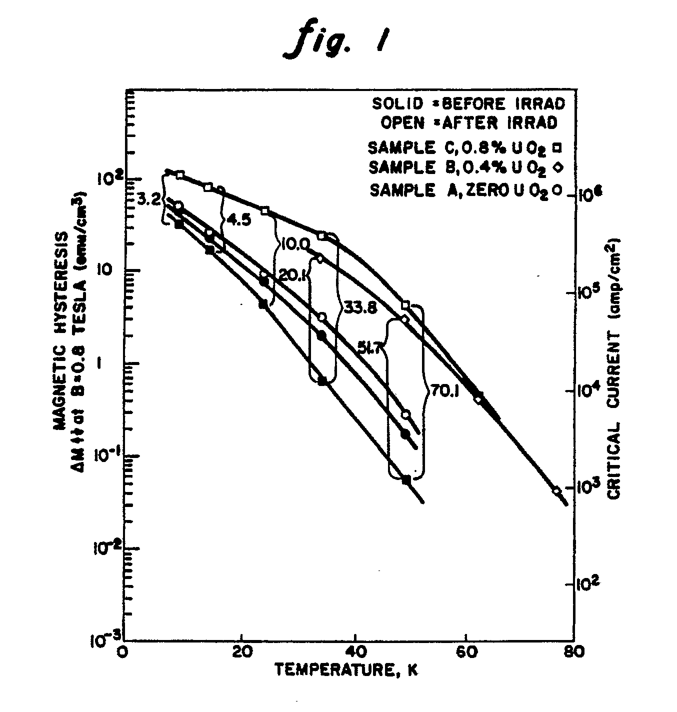

*fig. 1*

Die vorliegende Erfindung betrifft ein Verfahren zur Reinigung von Polyalkylenetherglykolen von ausgefällten Katalysatoren durch Abtrennung der gebildeten anorganischen Salze mit Hilfe eines Filtervlieses, bei dem man bei nachlassender Filterleistung das Filtervlies einer Wasserbehandlung und nachfolgender Trocknung aussetzt und erneut zur Abtrennung der gebildeten anorganischen Salze verwendet.

Polyetherpolyole sind wichtige Rohstoffe zur Herstellung von Polyurethanen oder Polyestern. Sie werden durch verschiedene Polymerisationsverfahren, z.B. aus Oxiranen - insbesondere aus Ethylenoxid oder Propylenoxid sowie aus Tetrahydrofuran und als Copolymere aus Oxiranen und Tetrahydrofuran hergestellt.

Polyetherpolyole entstehen durch anionische Polymerisation von Alkylen-oxiden in Gegenwart eines Startermoleküls und basischer Katalysatoren; Polytetramethylenetherglykole dagegen durch kationische Polymerisation von Tetrahydrofuran in Gegenwart von stark sauren Katalysatoren. Bei dieser Polymerisation entsteht als Precursor des Endproduktes ein Esterderivat des Glykols, das im Folgeschritt vor der Endanwendung meist in Gegenwart von basischen Katalysatoren hydrolisiert wird. Sowohl bei der Herstellung der Polyalkylenetherglykole aus Oxiranen als auch der auf Basis von Tetrahydrofuran ist im Endeffekt ein Neutralisationsschritt erforderlich, um im Polymerisat vorhandene basische Stoffe zu entfernen. Diese basischen Stoffe leiten sich von Alkali- und/oder seltener von Erdalkalimetallen ab. Für den Einsatz der Polyetherpolyole auf dem Polyurethangebiet z.B. ist es unerläßlich, daß sogar Spuren dieser basischen Metallverbindungen vollständig entfernt werden.

Eine Methode, mit der man dies zufriedenstellend auch unter technischen Bedingungen erreicht, wird in der EP-A-59 368 beschrieben. Nach der dort vermittelten Lehre erreicht man die Reinigung von Polyalkylenetherglykolen durch Neutralisation der alkalischen Katalysatoren mit einer Säure und nachfolgender Abtrennung der gebildeten anorganischen Salze, indem man die alkalischen Katalysatoren mit ortho-Phosphorsäure im Äquivalenzverhältnis von 1,5 bis 2,5 : 3 behandelt. Für die Abtrennung der Salze werden Filter beschrieben, die aus Vliesen von Zellstoff und ausgesuchten Kieselguren bestehen, empfohlen.

In den Filtern, die in der EP-A-59 368 beschrieben sind, erfolgt die Abscheidung der feinen Partikel mechanisch durch Tiefenwirkung. Deshalb sinkt die spezifische Filtriergeschwindigkeit (1m$^{-2}$,min$^{-1}$) verhältnismäßig schnell und kann durch Erhöhung des Filtrationsdruckes kaum kompensiert werden.

Ferner zeigen die eingesetzten Filter adsorptive Eigenschaften, so daß die Filtration sich farbaufhellend auf die Endprodukte auswirkt. Diese adsorptive Entfernung geringer Mengen farbgebender Verunreinigungen im Polymerisat durch die Filterschichten hat nur eine begrenzte Kapazität. Diese nimmt etwa synchron zu der Filterleistung ab. Dies ist ein weiterer Grund, häufige Filterwechsel vorzunehmen.

Aus den dargelegten Gründen bestand die Notwendigkeit, Filterleistung und Filterkapazität zu erhöhen, um den spezifischen Filterflächenverbrauch zu reduzieren.

Demgemäß wurden ein Verfahren zur Reinigung von Polyalkylenetherglykolen durch Neutralisation der alkalischen Katalysatoren mit ortho-Phosphorsäure im Äquivalenzverhältnis von 1,5 bis 2,5 : 3 und nachfolgender Abtrennung der gebildeten anorganischen Salze mit Hilfe von Filtervliesen gefunden, das dadurch gekennzeichnet ist, daß man bei nachlassender Filterleistung das Filtervlies einer Wasserbehandlung und nachfolgender Trocknung aussetzt und erneut zur Abtrennung der gebildeten anorganischen Salze verwendet.

Die Filtervliese können aus natürlichen oder synthetischen Fasern hergestellt sein. Synthetische Fasern bestehen z.B., aus Polypropylen, Nylon®, Polyester oder Polyvinylidenfluorid. Als natürliche Fasern verwendet man Zellulose. Beim erfindungsgemäßen Verfahren werden diese Zellstoff-Filtervliese bevorzugt, weil auch bei sehr kleiner Partikelgröße die höchsten Rückhalteraten erreicht werden.

Dabei stellte es sich überraschend heraus, daß die Filtrationsgeschwindigkeit, die man mit den durch Waschen und Trocknen regenerierten Filtervliesen erzielt, bis zu 70% höher liegen, als die, die mit noch nicht gebrauchten Vliesen erreicht werden.

Die regenerierten Filter entfalten darüberhinaus dieselbe farbverbessernde Wirkung wie neue Filter. Der Regenerierungsvorgang verbessert außerdem die Rückhalterate, die sich z.B. von der Trenngrenze >2 μm verändern kann.

Die Regenerierung durch Wasserbehandlung kann sehr oft wiederholt werden. Die spezifische Filterkapazität der Vliese läßt sich so um den Faktor 20 bis 40 vergrößern.

Die Regenerierung der Filterflächen mit Wasser erfolgt vorteilhaft bei erhöhter Temperatur, z.B. 50 bis 90°C, wenn drucklos gearbeitet wird oder 100 bis 150°C, wenn die Regenerierung unter Druck vorgenommen wird. Die für die Regenerierung aufzuwendende Wassermenge liegt zwischen 10 bis 100 l pro m$^2$ zu reinigender Filterschichtfläche.

Die regenerative Wirkung der Wasserbehandlung kann in manchen Fällen dadurch erhöht werden, daß dem Wasser geringe Mengen organischer oder anorganischer Säuren, z.B. 1 bis 20 Gew.-%,

vorzugsweise 5 bis 10 Gew.-%, zugesetzt werden. Geeignete organische Säuren sind z.B. Ameisensäure, Essigsäure, Propionsäure, Zitronensäure oder Tartronsäure. Als anorganische Säuren eignen sich Salzsäure, Schwefelsäure und bevorzugt Phosphorsäure.

In manchen Fällen hat sich auch ein Zusatz von 5 bis 15 Gew.-%, vorzugsweise 5 bis 10 Gew.-%, eines $C_1$- bis $C_4$-Alkanols, wie Methanol, Ethanol, n-Propanol, iso-Propanol, n-Butanol, iso-Butanol, sec.-Butanol oder tert.-Butanol, bevorzugt Methanol oder Ethanol bewährt.

Folgende Polyalkylenetherglykole können beispielsweise nach dem erfindungsgemäßen Verfahren vorteilhaft gereinigt werden: Homopolymere des Ethylen- oder Propylenoxids, Ethylen- und Propylenoxid enthaltende Copolymere, bevorzugt Copolymere des Tetrahydrofurans mit Ethylen- und/oder Propylenoxid sowie besonders bevorzugt Polytetramethylenetherglykol.

Wird die Neutralisation der Katalysatoren in den Polyetherglykolen gemäß EP-A-59 368 vorgenommen, so enthält das für die Regeneration der Filter-schichten verwendete Wasser z.B. Alkaliphosphate. Diese können nach bekannten Methoden gefällt und abgetrennt werden. Das so gereinigte Wasser, dessen Menge im Vergleich zum hergestellten Polymerisat gering ist, kann, da sein TOC-Wert [1]) klein ist und die Verunreinigungen leicht abbaubar sind, einfach durch Verbrennung oder biologische Reinigung entsorgt werden. Das neue erfindungsgemäße Verfahren ist deshalb auch im hohen Maße ökologisch verträglich.

Beispiele

Die genannten Teile sind Gewichtsteile, sie verhalten sich zu Volumenteilen wie Kilogramm zu Litern.

Beispiel

In einem heizbaren Rührwerksbehälter mit aufgesetzter Fraktionierkolonne wurden 450 Teile Polytetramethylenether-glykoldiacetat, das durch Polymerisation von Tetrahydrofuran mit Bleicherde als Katalysator und Essigsäureanhydrid als Reglersubstanz hergestellt wurde und ein mittleres Molekulargewicht von 650 besaß, 450 Teile Methanol und 0,73 Teile Natriummethylat gemischt, die Mischung zum Sieden erhitzt und über den Fraktionieraufsatz (35 theor. Böden) das gebildete Methylacetat als Azeotrop mit Methanol (19 %) mit einem Siedepunkt von 54°C abdestilliert. Sobald die Kopftemperatur dem Siedepunkt von reinem Methanol entsprach, wurde auf 50°C abgekühlt und mit 0,078 Teilen 85 %iger ortho-Phosphorsäure versetzt. Die Mischung wurde noch eine Stunde gerührt und anschließend zunächst bei Atmosphärendruck und später im Vakuum von Methanol befreit. Es blieb ein Rückstand zurück, in dem die bei der Neutralisation entstandenen feinverteilten Natriumphosphate suspendiert waren. Bei der Filtration des Polymerisates über die Seitz-Supra®-Filterschicht 300 wurden diese bis auf eine Konzentration von 2 ppm entfernt. Es wurde ein Filtrationsdruck von 2 bar eingestellt. Die Temperatur des Polymerisates und des beheizten Filters betrug 80°C. Die Filtrationsleistung betrug am Anfang 16,5 kg $m^{-2} \cdot min^{-1}$. Nachdem 40 kg pro $m^2$ Filterfläche filtriert worden waren, betrug die Filtrationsgeschwindigkeit nur noch 1,5 kg $m^{-1} \cdot min^{-1}$.

Durch Leerdrücken des Filtergehäuses mit Stickstoff (2 bar) wurde das Filter weitgehend von Polymerisat befreit. Wie bei der Filtration des Polymerisates durchgeführt, wurde nun das Filter mit Wasser von 85°C gefüllt, 2 Stunden stehengelassen und das Wasser danach mit Stickstoffdruck von 0,1 bar durch die Filterschicht gedrückt. Pro $m^2$ Filterfläche wurden 1,2 1 . Wasser verwendet. Das austretende Wasser war zunächst braun gefärbt, heilte sich aber bei fortschreitender Filtration mehr und mehr auf.

Sobald alles Wasser durch die Filterschichten getreten war, wurden diese durch Hindurchblasen von heißem Stickstoff (130°C) getrocknet. Diese Trocknung kann auch mit überhitztem Wasserdampf erfolgen. Sobald die Filterschichten vollständig getrocknet waren (erkennbar durch Beobachtung des Taupunktes) wurde die Filtration des natriumphosphathaltigen Polytetramethylenetherglykols fortgesetzt. Die anfängliche Filtrationsleistung betrug nun 28 kg $m^{-2} \cdot min^{-1}$. Nachdem 50 t Polymerisat pro $m^2$ Filterfläche filtriert worden waren, sank die Filterleistung auf 2 kg $m^{-2} \cdot min^{-1}$.

Die Farbe des Polymerisats lag anfangs nach der Filtratmenge von 20 kg bei 10 APHA (DIN 53409) und stieg in der Endphase nach 50 t Filtrat auf 25 APHA an.

Nach der nächsten Regeneration - wie oben beschrieben - erhält man wieder die Filtrationsleistung wie nach der ersten Regeneration. Die Filtrationskapazität ist ebenfalls so hoch wie nach der ersten Regeneration der Filterschicht. Die Farbverbesserung des Polymerisates durch die Filtration wird auch hier beobachtet.

Selbst nach 30 Regenerationszyklen wurde keine Verhänderung der Filtrationsleistung und Filtrationskapazität beobachtet. Auch die Farbe des erhaltenen Fertigpolymerisates verändert sich bei jedem Zyklus von anfangs 10 APHA auf 25 APHA vor der nächsten Regeneration.

[1]) TOC = total organic carbon

**Patentansprüche**

1. Verfahren zur Reinigung von Polyalkylenetherglykolen durch Neutralisation der alkalischen Katalysatoren mit ortho-Phosphorsäure im Äquivalenzverhältnis von 1,5 bis 2,5 : 3 und nachfolgender Abtrennung der gebildeten anorganischen Salze mit Hilfe eines Filtervlieses, dadurch gekennzeichnet, daß man bei nachlassender Filterleistung das Filtervlies einer Wasserbehandlung und nachfolgender Trocknung aussetzt und erneut zur Abtrennung der gebildeten anorganischen Salze verwendet.

2. Verfahren nach Anspruch 1, dadurch gekennzeichnet, daß man Zellstoff-Filtervliese verwendet.

3. Verfahren nach Anspruch 1, dadurch gekennzeichnet, daß das für die Regenerierung verwendete Wasser 5 bis 20 Gew.-% einer organischen oder anorganischen Säure enthält.

4. Verfahren nach Anspruch 1, dadurch gekennzeichnet, daß das zur Regenerierung der Filterschicht verwendete Wasser bis bis 15 Gew.-% eines niedermolekularen Alkohols enthält.

5. Verfahren nach Anspruch 1, dadurch gekennzeichnet, daß man als Polyalkylenetherglykol Polytetramethylenetherglykol verwendet.

Europäisches
Patentamt

**EUROPÄISCHER
RECHERCHENBERICHT**

Nummer der Anmeldung

**EP 91 10 6757**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,X | EP-A-0 059 368  (BASF AKTIENGESELLSCHAFT)<br>* Seite 5, Zeilen 7 - 16; Ansprüche * * Beispiel 1 * | 1,2,5 | C 08 G 65/30 |
| A | CHEMICAL ABSTRACTS, vol. 85, no. 22, 29 November 1976 Columbus, Ohio, USA T.HYODO et al.: "NEUTRALIZATION OF POLYETHER & JP-A-76101098 (07.SEPT.1976) ASHAI DENKA K.K.K." Seite 46; Spalte 1; ref. no. 85:161206S<br>* Zusammenfassung * | 1 | |
| A | US-A-4 535 189  (M.CUSCURIDA)<br>* Spalte 3, Zeilen 15 - 62 * | 1 | |
| A | US-A-3 000 963  (G.P.SPERANZA)<br>* Spalte 1, Zeile 65 - Spalte 2, Zeile 21; Ansprüche * | 1 | |
| A | EP-A-0 102 508  (BASF AKTIENGESELLSCHAFT)<br>* Ansprüche * * Beispiele * | 1 | |
| A | "THE MERCK INDEX ELEVENTH EDITION" & CO, RAHWAY, N.J., U.S.A.,<br>* Seiten 1366-1367, Referenzen 8612, 8613, 8615 * | 1 | RECHERCHIERTE SACHGEBIETE (Int. Cl.5)<br><br>C 08 G |
| A | H.F.MARK: "KIRK-OTHMER ENCYCLOPEDIA OF CHEMICAL TECHNOLOGY EDIT.3 VOL.10" & SONS, N.Y., U.S.A.<br>* Seiten 284 - 337 * | 1 | |

Der vorliegende Recherchenbericht wurde für alle Patentansprüche erstellt

| Recherchenort | Abschlußdatum der Recherche | Prüfer |
|---|---|---|
| Den Haag | 13 August 91 | WEIS R.E. |